# EUROPEAN PATENT APPLICATION

(11) **EP 4 620 728 A1**
(43) Date of publication of application: **24.09.2025**
(21) Application number: 24845794.7
(22) Date of filing: 10.06.2024
(51) Int. Cl.: B60L 58/20, B60L 58/26, B60K 1/04, B60K 11/02, B60L 3/00, B60K 1/00

(54) **BATTERY SYSTEM AND OPERATING METHOD OF BATTERY SYSTEM**

(30) Priority: 27.07.2023 KR 20230098137
(71) Applicant: LG Energy Solution, Ltd., Seoul 07335 (KR)
(72) Inventor: LEE, Bumhee, Daejeon 34122 (KR); KIM, Uiseong, Daejeon 34122 (KR)
(74) Representative: Hoffmann Eitle
(86) International application number: PCT/KR2024/007839
(87) International publication number: WO 2025/023490

(57) **Abstract**

A battery system in an electric vehicle includes: a main battery; a battery management device that controls power supply from the main battery to be blocked when an abnormality has occurred in one or more components included in the electric vehicle; and an auxiliary battery provided separately from the main battery and that supplies power to one or more components provided in a cooling system that cools the main battery.

## Description

### [Technical Field]

This application is based on and claims priority from Korean Patent Application No. 10-2023-0098137, filed on July 27, 2023, with the Korean Intellectual Property Office, the disclosure of which is incorporated herein in its entirety by reference.

The present disclosure relates to a battery system and a method of operating the same.

### [Background Art]

Secondary batteries are reused by charging even after discharge, and used as an energy source for small devices such as portable phones, tablet PCs, and vacuum cleaners. The secondary batteries are also used as an energy source for medium-to-large devices such as automobiles and energy storage systems (ESSs) for smart grids.

The secondary batteries are applied to a system in the form of an assembly such as a battery module in which multiple battery cells are connected in series or in parallel, or a battery pack in which multiple battery modules are connected in series or in parallel, depending on the system requirements. In the case of medium-to-large devices such as electric vehicles, a high-capacity battery system in which multiple battery packs are connected in parallel may be applied to meet the required capacities of the devices.

Efforts are being made continuously to ensure the stability of a battery system even in various abnormal situations such as an abnormally high temperature of a battery in electric vehicles equipped with high-capacity battery systems as described above (see, e.g., Korean Patent Laid-Open Publication No. 2020-0006404).

### [Detailed Description of the Invention]

### [Technical Problem]

The present disclosure provides a battery system that is capable of improving the temperature stability of a battery even when an abnormal state occurs.

The present disclosure provides a method of operating such a battery system.

### [Technical Solution]

A battery system according to an embodiment of the present disclosure includes: a main battery; a battery management device that controls power supply from the main battery to be blocked when an abnormality has occurred in one or more components included in the electric vehicle; and an auxiliary battery provided separately from the main battery and that supplies power to one or more components provided in a cooling system that cools the main battery when the power supply from the main battery is blocked.

The auxiliary battery may be configured to supply power to a refrigerant circulation unit that circulates the refrigerant within a refrigerant circulation path. Here, the main battery may be configured to supply power to the cooling system, and the auxiliary battery may be configured to supply power only to the refrigerant circulation unit provided in the cooling system when the power supply from the main battery is blocked.

The cooling system according to the embodiment includes: a refrigerant circulation path in which the refrigerant flows; a heat exchange unit that cools the refrigerant; and a refrigerant circulation pump that allows the refrigerant to circulate within the refrigerant circulation path. Here, the auxiliary battery may be configured to supply power to the refrigerant circulation pump when the power supply from the main battery is blocked.

When an abnormality has occurred in the one or more components, the power supply to the heat exchange unit by the main battery may be blocked. Here, the refrigerant circulation pump may operate using the power supplied by the auxiliary battery to allow the refrigerant to circulate within the refrigerant circulation path without being cooled by a heat exchange unit.

The auxiliary battery may be configured to exhibit an output voltage lower than the output voltage of the main battery.

When an abnormality has occurred in the one or more components, the battery management device may switch a main relay disposed in a power supply path in the output side of the main battery from a closed state to an open state, and control one or more components provided in the cooling system to operate using the power supplied by the auxiliary battery.

The battery management device according to the embodiment diagnoses whether the abnormality has occurred in the battery system in a driving mode of the electric vehicle or in a charging mode of the main battery, and controls the power supply from the main battery to be blocked and the power supply from the auxiliary battery to be allowed when an occurrence of the abnormality is detected.

The battery management device is activated at each predetermined time in a parking mode of the electric vehicle or a sleep mode of the battery system, and diagnoses whether the abnormality has occurred in the battery system, and, when the occurrence of the abnormality is detected, controls the power supply from the main battery to remain blocked and the power supply from the auxiliary battery to be allowed.

A method of operating a battery system according to another embodiment of the present disclosure is executed by a battery management device disposed within an electric vehicle and includes: diagnosing whether an abnormality has occurred in the battery system; controlling power supply from a main battery to be blocked when an occurrence of the abnormality is detected; and, when the power supply from the main battery is blocked, controlling an auxiliary battery, which is provided separately from the main battery, to supply power to one or more components included in a cooling system that cools the main battery.

The controlling the auxiliary battery to supply power to the one or more components provided in the cooling system includes controlling the auxiliary battery to supply power to a refrigerant circulation pump that circulates the refrigerant within a refrigerant circulation path.

The main battery supplies power to the cooling system, and the auxiliary battery supplies power only to the refrigerant circulation pump provided in the cooling system when the power supply from the main battery is blocked.

The cooling system includes: a refrigerant circulation path in which the refrigerant flows; a heat exchange unit that cools the refrigerant; and a refrigerant circulation pump that allows the refrigerant to circulate within the refrigerant circulation path. The controlling of the auxiliary battery to supply power to the one or more components provided in the cooling system includes controlling the auxiliary battery to supply power to the refrigerant circulation pump.

The controlling the power supply from the main battery to be blocked includes controlling the power supply to a heat exchange unit by the main battery to be blocked. The controlling the auxiliary battery to supply power to the refrigerant circulation pump includes operating the refrigerant circulation pump by power supplied by the auxiliary battery to allow the refrigerant to circulate within the refrigerant circulation path without being cooled by the heat exchange unit.

The auxiliary battery may be configured to exhibit an output voltage lower than the output voltage of the main battery.

The controlling the power supply from the main battery to be blocked includes switching a main relay disposed on a power supply path on the output side of the main battery from a closed state to an open state. The controlling the auxiliary battery to supply power to the one or more components includes controlling the one or more components to operate using the power supplied by the auxiliary battery.

The diagnosing whether the abnormality has occurred in the battery system according to another embodiment includes diagnosing whether the abnormality has occurred in the battery system in a driving mode of the electric vehicle or a charging mode of the main battery.

The diagnosing whether the abnormality has occurred in the battery system includes activating the battery management device at each predetermined time in the parking mode of the electric vehicle or the sleep mode of the battery system and diagnosing whether the abnormality has occurred.

A battery system according to another embodiment, which is disposed within an electric vehicle, includes: a main battery that supplies power to the electric vehicle; a battery management device that controls power supply from the main battery to be blocked when an abnormality has occurred in one or more components included in the electric vehicle; and an auxiliary battery provided separately from the main battery and that directly supplies power to only a specific component among one or more components provided in the cooling system that cools the main battery and not to supply power to the remaining components of the cooling system when the power supply from the main battery is blocked.

The cooling system includes: a refrigerant circulation path in which the refrigerant flows; a heat exchange unit that cools the refrigerant; and a refrigerant circulation pump that allows the refrigerant to circulate within the refrigerant circulation path, and the auxiliary battery supplies power only to the refrigerant circulation pump of the cooling system when the power supply from the main battery is blocked.

### [Advantageous Effects]

According to the embodiments of the present disclosure described above, even when the output of the main battery is blocked due to an occurrence of an abnormal state in the battery system, at least some functions of the cooling system are activated by the auxiliary battery so that the temperature stability of the battery system may be improved over the conventional battery system.

### [Brief Description of the Drawings]

FIG. 1 is a block diagram of a battery system according to an embodiment of the present disclosure.
FIG. 2 is a block diagram of a battery system according to another embodiment of the present disclosure.
FIG. 3 is a reference view illustrating a cooling system according to an embodiment of the present disclosure.
FIG. 4 is an operation flowchart of a method of operating a battery system according to an embodiment of the present disclosure.
FIG. 5 is an operation flowchart of a method of operating a battery system according to another embodiment of the present disclosure.
FIG. 6 is an operation flowchart of a method of operating a battery system according to another embodiment of the present disclosure.
FIG. 7 is a block diagram of a battery management device according to an embodiment of the present disclosure.

In some of the accompanying drawings, corresponding components are given the same reference numerals. A person ordinarily skilled in the art will appreciate that the drawings illustrate elements simply and clearly and are not necessarily drawn to scale. For example, in order to aid understanding of various embodiments, the dimensions of some elements illustrated in the drawings may be exaggerated compared to other elements. In addition, elements that are useful or essential in commercially implementable embodiments but are known in the art may often not be described in order to avoid impeding the understanding of the spirit of various embodiments of the present disclosure.
110: main battery
120: auxiliary battery
200: battery management device
300: power request device
310: driving device
320: cooling system
321: refrigerant circulation path
322: heat exchange unit
323: refrigerant circulation pump

### [Best Mode]

The present disclosure may be variously modified and may have various embodiments. Thus, specific embodiments will be exemplified in the drawings and described in detail in the detailed description. However, it is to be understood that this is not intended to limit the present disclosure to specific embodiments, and all the modifications, equivalents, and substitutions fall within the spirit and scope of the present disclosure. When describing each drawing, similar reference numerals are used for similar components.

Terms such as "first," "second," "A," and "B," may be used to describe various components, but the components should not be limited by the terms. These terms are used only for the purpose of distinguishing one component from another. For example, without departing from the scope of the disclosure, a first component may be referred to as a second component, and similarly, a second component may also be referred to as a first component. The term "and/or" includes a combination of a plurality of related listed items or any of a plurality of related listed items.

When a component is referred to as being "connected" or "coupled" to another component, it is to be understood that the component may be directly connected or coupled to the other element, but another component may be present therebetween. In contrast, when a component is referred to as being "directly connected" or "directly coupled" to another component, it is to be understood that no other components are not present therebetween.

The terms used herein are only used to describe specific embodiments and are not intended to limit the present disclosure. Singular expressions include plural expressions unless the context clearly dictates otherwise. Herein, it is to be understood that the terms, such as "include" and "have," are intended to indicate the presence of features, numbers, steps, operations, components, parts described in the description, or combinations thereof, but are not intended to preclude the possibility of presence or addition of one or more other features, numbers, steps, operations, components, parts, or combinations thereof.

Unless defined otherwise, all terms used herein, including technical or scientific terms, have the same meaning as commonly understood by a person ordinarily skilled in the art to which the present disclosure belongs. Terms, such as those defined in a commonly used dictionary, are to be interpreted as having a meaning consistent with the meaning in the context of the related art, and not to be interpreted in an ideal or excessively formal meaning unless explicitly defined herein.

When a predetermined abnormal state is detected in a battery system while an electric vehicle is in a driving mode or a battery is being charged, a relay disposed in the output side of the battery is switched to an open state, thereby blocking the charging and discharging power of the battery. While a battery cooling system for temperature stability of a battery operates by receiving power from a battery, when the supply of battery power is blocked by opening the relay, the battery cooling function is also stopped.

The present disclosure provides a battery protection technology that is capable of improving the temperature stability of a battery even when a relay disposed in the output side of the battery is switched to the open state due to the occurrence of an abnormal condition in a battery system, and a charging and discharging path is blocked.

Some terms used herein are defined as follows.

A battery cell is the smallest unit that stores power, and a battery module refers to an assembly in which multiple battery cells are electrically connected.

A battery pack or battery rack refers to a system with a minimal single structure that electrically connects module units set by a battery manufacturer and is capable of being monitored and controlled through a battery management system (BMS), and may include multiple battery modules and a single battery protection unit (BPU) or protection device.

A battery bank may refer to a group of large-scale battery rack systems in each of which a plurality of battery racks are connected in parallel. Monitoring and control of the rack BMS (RBMS) at the battery rack level may be performed via the BMS at the battery bank level.

A battery assembly refers to an assembly that includes a plurality of electrically connected battery cells and is applied to a specific system or device to function as a power source. Here, the battery assembly may refer to, for example, a battery module, a battery pack, a battery rack, or a battery bank, but the scope of the present disclosure is not limited to these entities.

Hereinafter, embodiments of the present disclosure will be described in detail with reference to the attached drawings.

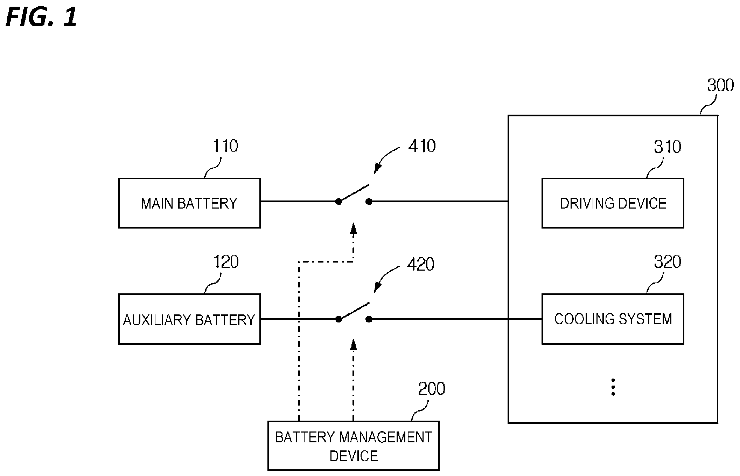

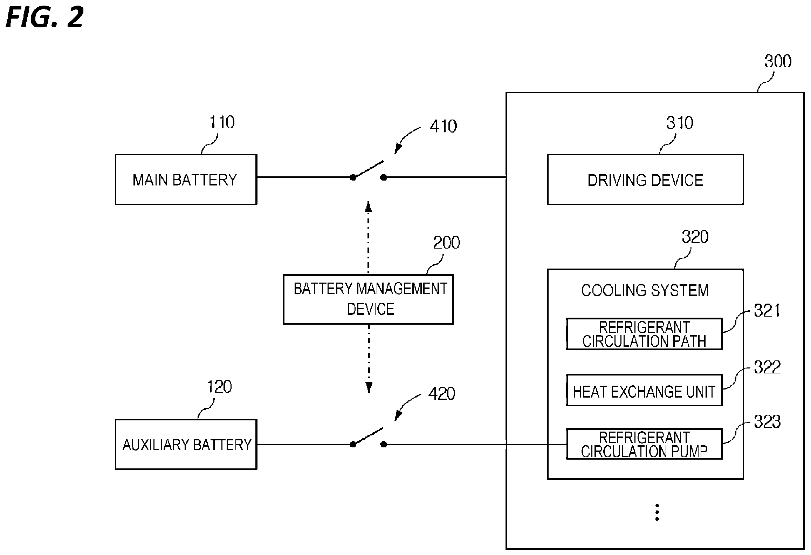

FIGS. 1 and 2 are block diagrams of a battery system according to an embodiment of the present disclosure.

Referring to FIG. **1****,** the battery system according to an embodiment includes a main battery 110, an auxiliary battery 120, and a battery management device 200.

The main battery 110 may be configured to supply power to a power request device 300 placed within an electric vehicle. Here, the power request device 300 may include a driving device 310 and a cooling system 320 of the electric vehicle. In addition, the power request device 300 may include various components for operating the electric vehicle in addition to the driving device 310 and the cooling system 320. The cooling system 320 according to an embodiment of the present disclosure includes a refrigerant circulation path 321 in which refrigerant flows, a heat exchange unit 322 configured to cool the refrigerant, and a refrigerant circulation pump 323 configured to circulate the refrigerant within the refrigerant circulation path 321.

The auxiliary battery 120 may be configured to supply power to one or more components provided in the cooling system 320. Here, the auxiliary battery 120 may be configured to supply power to activate at least some functions of the cooling system 320. In an embodiment, the auxiliary battery 120 is configured to supply power to a refrigerant circulation unit, which circulates the refrigerant within the refrigerant circulation path 321.

A main relay 410 is disposed in a power supply path in the output side of the main battery 110 and is configured to electrically connect or disconnect the main battery 110 to or from the power request device 300. Here, the main relay 410 may be on/off-controlled by the battery management device 200.

The auxiliary relay 420 may be disposed in a power supply path in the output side of the auxiliary battery 120 and configured to electrically connect or disconnect specific components of the auxiliary battery 120 to or from the cooling system 320. Here, an auxiliary relay 420 may be on/off-controlled by the battery management device 200.

Meanwhile, as illustrated in FIG. 2, the auxiliary battery 120 may be configured to be directly connected to a specific component of the cooling system 320 such as, for example, the refrigerant circulation pump 323. Here, the refrigerant circulation pump 323, which is a corresponding component connected to the auxiliary battery 120, may be on/off-controlled by the battery management device 200.

In the present disclosure, the main battery 110 and the auxiliary battery 120 may refer to battery cells or battery assemblies.

According to an embodiment, the auxiliary battery 120 may be a battery that exhibits an output voltage lower than the output voltage of the main battery 110.

The battery management device 200 may correspond to a battery management system (BMS) disposed within a battery system, or may be included in a BMS.

The battery management device 200 may perform a control operation regarding whether to supply power to the main battery 110 by controlling the on/off operation of the main relay 410. For example, the battery management device 200 may control the main relay 410 either to be closed so that the power stored in the main battery 110 is supplied to the power request device 300, or to be open so that the power supply from the main battery 110 is blocked.

The battery management device 200 may perform a control operation regarding whether to supply power to the auxiliary battery 120 by controlling the on/off operation of the main relay 420. For example, the battery management device 200 may control the auxiliary relay 420 to be closed so that the power stored in the auxiliary battery 120 is supplied to the cooling system 320 or a specific component of the cooling system 320, such as the refrigerant circulation pump 323. The battery management device 200 may also control the auxiliary relay 420 to be open so that power supply to the cooling system 320 or a specific component of the cooling system 320, such as the refrigerant circulation pump 323, by the auxiliary battery 120 is blocked.

According to an embodiment, the battery management device 200 may diagnose whether an abnormality has occurred in the battery system. Here, the battery management device 200 may collect state information of the battery system via one or more sensors and, based on the collected state information, determine whether a predetermined abnormal state has occurred in the battery system. For example, the battery management device 200 may determine whether an abnormal state such as overheating, high voltage, high current, short circuit, arcing, or venting has occurred in the battery system.

According to an embodiment, the battery management device 200 may cooperate with a diagnostic unit of the electric vehicle so as to identify whether an abnormality has occurred in one or more components included in the electric vehicle. For example, the battery management device 200 may be configured to receive information about an abnormal state of an external component of the battery system from the diagnostic unit of the electric vehicle.

The battery management device 200 may control the power supply from the main battery 110 to be blocked when the abnormality has occurred in the battery system or in the electric vehicle, and control the one or more components provided in the cooling system 320 to operate using the power supplied by the auxiliary battery 120.

For example, when a predetermined abnormal state is detected in the battery system or in the electric vehicle, the battery management device 200 may switch the main relay 410 from the closed state to the open state, and switch the auxiliary relay 420 from the open state to the closed state. As a result, the power supply to the power request device 300 by the main battery 110 is blocked, and at least a portion of functions of the cooling system 320 (e.g., only the function of the refrigerant circulation pump 323) may be activated by the auxiliary battery 120. At this time, since the power supply to the heat exchange unit 322 is blocked, the refrigerant C may be circulated within the refrigerant circulation path 321 without being cooled by the heat exchange unit 322.

Meanwhile, when the auxiliary battery 120 is configured to be directly connected to a specific component of the cooling system 320 such as the refrigerant circulation pump 323, the battery management device 200 may switch the main relay 410 from the closed state to the open state, and switch the power supply path to the corresponding component so that the corresponding component may operate using the power supplied by the auxiliary battery 120, rather than the main battery 110.

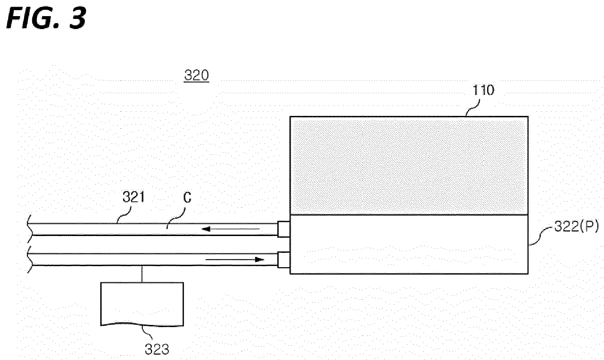

FIG. 3 is a reference view illustrating the cooling system 320 according to an embodiment of the present disclosure.

Referring to FIG. 3, the cooling system 320 may include a refrigerant circulation path 321 through which the refrigerant C circulates. According to an embodiment, the refrigerant C may be cooling water.

A cooling plate P may be configured to be in contact with at least a portion of the outer surface of the main battery 110, and a portion of the refrigerant circulation path 321 may be accommodated inside the cooling plate P. Here, the refrigerant C may flow inside the cooling plate P and absorb heat generated from the main battery 110. According to an embodiment, the cooling plate P may be the heat exchange unit 322.

The cooling system 320 may reduce the temperature of the refrigerant C via the heat exchange unit 322. Here, the heat exchange unit 322 may allow a first refrigerant C for cooling the main battery 110 to exchange heat with a second refrigerant having a lower temperature than that of the first refrigerant C, so that the temperature of the first refrigerant C may be reduced.

The refrigerant circulation pump 323 may be disposed in the flow path of the refrigerant C and apply a pressure to the refrigerant C such that the refrigerant C is circulated in a specific direction within the refrigerant circulation path 321.

Referring back to FIG. 2, the auxiliary battery 120 may be configured to supply power to the refrigerant circulation pump 323 provided in the cooling system 320. Here, the auxiliary battery 120 may be configured to supply power only to the refrigerant circulation pump 323, without supplying power to other components such as the heat exchange unit 322.

The auxiliary battery 120 may be configured to exhibit an output voltage lower than the output voltage of the main battery 110. For example, the auxiliary battery 120 may be configured as a 12V lead-acid battery or a 48V low-voltage battery configured to activate only the refrigerant circulation function of the cooling system 320.

According to an embodiment of the present disclosure, when the output of the main battery 110 is blocked due to an occurrence of an abnormal state in the battery system, the battery cooling function may be deactivated, but the refrigerant circulation function of the cooling system 320 may be activated by the auxiliary battery 120, which is, for example, a low-voltage battery. As a result, the temperature of the main battery 110 may be stabilized at least for a certain period of time, and an occurrence of an additional abnormal state may be prevented or delayed.

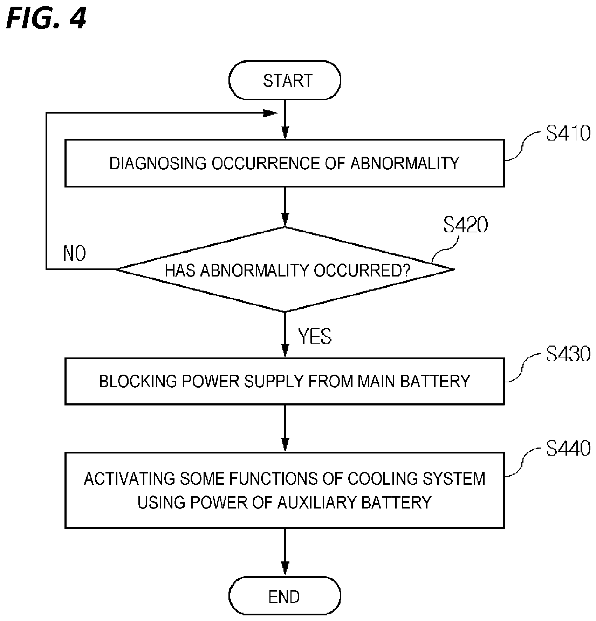

FIG. 4 is an operation flowchart of a method of operating a battery system according to an embodiment of the present disclosure.

The method of operating the battery system according to an embodiment of the present disclosure may be performed by a battery management device 200 disposed in an electric vehicle.

In addition, the method of operating the battery system according to an embodiment of the present disclosure may be performed in a driving mode of the electric vehicle or in a charging mode of the main battery.

The battery management device 200 may diagnose whether an abnormality has occurred in a battery system or in the electric vehicle (S410). Here, the battery management device 200 may collect state information of the battery system via one or more sensors and, based on the collected state information, determine whether a predetermined abnormal state has occurred. In addition, the battery management device 200 may receive abnormal state information about an external component of the battery system from a diagnosis unit of the electric vehicle.

The battery management device 200 may identify whether the predetermined abnormal state has occurred (S420) and, when the abnormal state has occurred, the battery management device may control the power supply from the main battery 110 to be blocked (S430). Here, the battery management device 200 may block the output of the main battery 110 by switching the main relay 410 disposed in the power supply path in the output side of the main battery 110 from the closed state to the open state.

The battery management device 200 may control a portion of functions of the cooling system 320 to be activated by the power of the auxiliary battery 120 (S440).

For example, the battery management device 200 may control one or more components provided in the cooling system 320 to operate using the power supplied by the auxiliary battery 120 so that at least a portion of functions of the cooling system 320 may be activated.

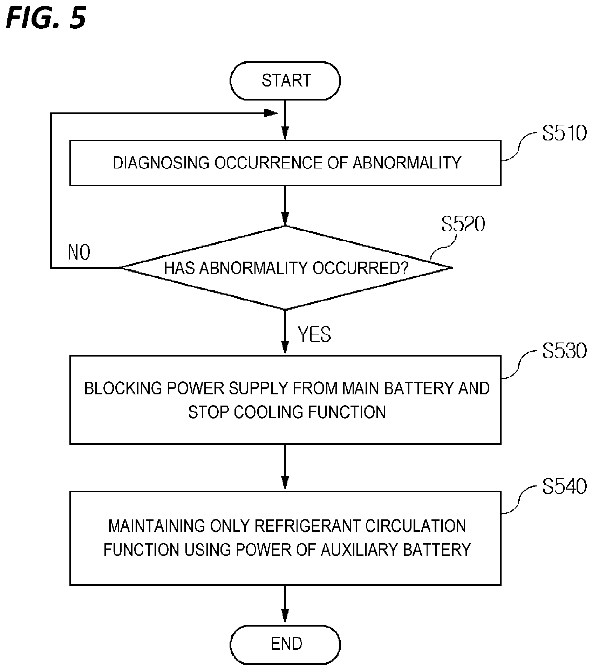

FIG. 5 is an operation flowchart of a method of operating a battery system according to another embodiment of the present disclosure.

The battery management device 200 may diagnose whether an abnormality has occurred in a battery system or in the electric vehicle (S510). Here, the battery management device 200 may collect state information of the battery system via one or more sensors and, based on the collected state information, determine whether a predetermined abnormal state has occurred. In addition, the battery management device 200 may receive abnormal state information about an external component of the battery system from a diagnosis unit of the electric vehicle.

The battery management device 200 may determine whether the predetermined abnormal state has occurred (S520) and, when it is determined that the abnormal state has occurred, the battery management device may control the power supply from the main battery 110 to be blocked (S530). Here, since the heat exchange unit 322 of the battery cooling system 320 is configured to operate by receiving power from the main battery 110, the cooling function of the battery may be stopped.

The battery management device 200 may control only the refrigerant circulation function of the cooling system 320 to be maintained by the power of the auxiliary battery 120 (S540).

For example, the auxiliary battery 120 may be configured to supply power to a refrigerant circulation unit (e.g., the refrigerant circulation pump 323) provided in the cooling system 320. Here, even when the output of the main battery 110 is blocked due to the occurrence of the abnormal state, the refrigerant circulation unit may operate using the power of the auxiliary battery 120 so that the refrigerant circulation function may be maintained. At this time, since the power supply to the heat exchange unit 322 is blocked, the refrigerant may be circulated within the refrigerant circulation path 321 without being cooled by the heat exchange unit 322.

According to an embodiment of the present disclosure, when the output of the main battery 110 is blocked due to the occurrence of the abnormal state, the battery cooling function is deactivated, but the refrigerant circulation function may be activated by the auxiliary battery 120, which is a low-voltage battery. As a result, the temperature of the main battery 110 may be stabilized at least for a certain period of time, and the occurrence of an additional abnormal state may be prevented or delayed.

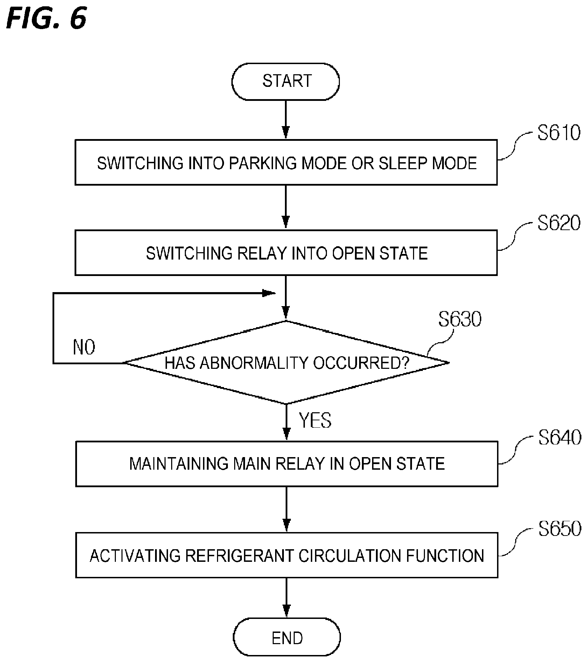

FIG. 6 is an operation flowchart of a method of operating a battery system according to another embodiment of the present disclosure.

The method of operating a battery system according to another embodiment of the present disclosure may be performed in a parking mode of an electric vehicle or a sleep mode of a battery system.

When the electric vehicle is switched to the parking mode or the battery system is switched to the sleep mode (S610), the battery management device 200 may switch the main relay 410 from the closed state to the open state (S620). As a result, the output power from the main battery 110 may be blocked.

Thereafter, the battery management device 200 may be activated at each predetermined time to determine whether an abnormality has occurred in the battery system and in the electric vehicle (S630).

When it is determined that a predetermined abnormal state has occurred, the battery management device may maintain the state of blocking the power supply of the main battery 110 (S640). For example, even when the electric vehicle is switched from the parking mode to the driving mode or even when the sleep mode of the battery system is released, the battery management device 200 may prevent the main relay 410 from being switched into the closed state so that the main relay 410 maintains the open state.

In addition, the battery management device 200 may control the refrigerant circulation unit (e.g., the refrigerant circulation pump 323) to operate using the power of the auxiliary battery 120 so that the refrigerant circulation function of the cooling system 320 may be activated (S650). As a result, even when the abnormal state has occurred, the refrigerant circulation function may be activated by the auxiliary battery 120 so that the temperature of the main battery 110 may be stabilized at least for a certain period of time.

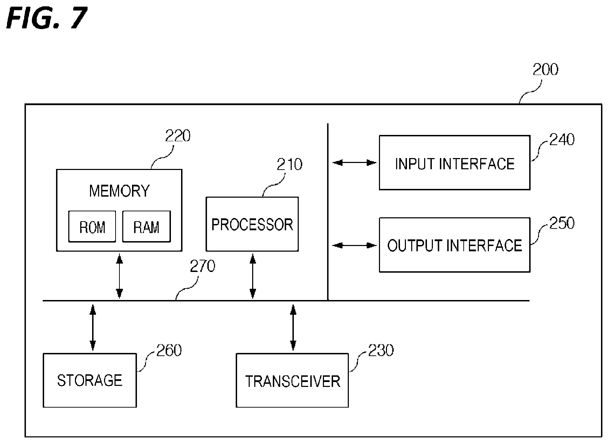

FIG. 7 is a block diagram of a battery management device 200 according to an embodiment of the present disclosure.

The battery management device 200 according to an embodiment of the present disclosure may correspond to a battery management system (BMS) disposed within a battery system, or may be included in a BMS.

The battery management device 200 may include at least one processor 210, a memory 220 configured to store at least one command to be executed through the processor 210, and a transceiver 230 connected to a network to conduct communication.

The at least one command may include: a command for diagnosing whether an abnormality has occurred in the battery system or in the electric vehicle; a command for controlling power supply from the main battery 110 to be blocked when the abnormality is detected; and a command for controlling the auxiliary battery 120, which is provided separately from the main battery 110, to supply power to one or more components provided in the cooling system 320 configured to cool the main battery 110.

The command for controlling the auxiliary battery to supply power to the one or more components provided in the cooling system 320 may include a command for controlling the auxiliary battery 120 to supply power to a refrigerant circulation unit (e.g., the refrigerant circulation pump 323) that circulates refrigerant within the refrigerant circulation path 321.

The main battery 110 may be configured to supply power to the cooling system 320, and the auxiliary battery 120 may be configured to supply power only to the refrigerant circulation unit (e.g., the refrigerant circulation pump 323) provided in the cooling system 320 when power supply from the main battery 110 is blocked.

The cooling system 320 may include: a refrigerant circulation path 321 in which the refrigerant flows; a heat exchange unit 322 configured to cool the refrigerant; and a refrigerant circulation pump 323 configured to allow the refrigerant to circulate within the refrigerant circulation path. Here, the command for controlling the auxiliary battery to supply power to the one or more components provided in the cooling system 320 may include a command for controlling the auxiliary battery 120 to supply power to the refrigerant circulation pump 323.

The command for blocking the power supply from the main battery 110 may include a command for blocking the power supply from the main battery 110 to the heat exchange unit 322. Here, the command for supplying power from the auxiliary battery 120 to the refrigerant circulation pump 323 may include a command for operating the refrigerant circulation pump 323 using the power supplied from the auxiliary battery 120 so as to allow the refrigerant to circulate within the refrigerant circulation path 321 without being cooled by the heat exchange unit 322.

The command for blocking the power supply from the main battery 110 may include a command for switching the main relay 410 disposed in the power supply path in the output side of the main battery 110 from the closed state to the open state. Here, the command for supplying power from the auxiliary battery 120 to the one or more components of the cooling system 320 may include a command for operating the one or more components using the power supplied from the auxiliary battery 120.

The command for diagnosing whether the abnormality has occurred in the battery system or in the electric vehicle may include a command for diagnosing whether the abnormality has occurred in the battery system or in the electric vehicle in the driving mode of the electric vehicle or in the charging mode of the main battery 110.

The command for diagnosing whether the abnormality has occurred in the battery system or in the electric vehicle may include a command for activating the battery management unit 200 at each predetermined time in the parking mode of the electric vehicle or the sleep mode of the battery system, and diagnosing whether the abnormality has occurred in the battery system or in the electric vehicle.

The battery management device 200 may further include an input interface device 240, an output interface device 250, a storage 260, and the like. Individual components included in the battery management device 200 may be connected by a bus 270 to communicate with each other.

The processor 210 may refer to a central processing unit (CPU), a graphics processing unit (GPU), or a dedicated processor executing the methods according to embodiments of the present disclosure. The memory (or a storage) may include at least one of a volatile storage medium and a non-volatile storage medium. For example, the memory may be configured with at least one of read-only memory (ROM) and random access memory (RAM).

The operations of the method according to the embodiments of the present disclosure may be implemented as computer-readable programs or codes on computer-readable recording media. The computer-readable recording media include all types of recording devices that store data readable by computer systems. In addition, the computer-readable recording media may be distributed over the computer systems connected to a network such that the computer-readable programs or codes may be stored and executed in a distributed manner.

Although some aspects of the disclosure have been described in the context of a device, these aspects also represent a description of a corresponding method where a block or device corresponds to a method step or a feature of a method step. Similarly, aspects described in the context of a method also represent a description of a corresponding block or item or a feature of a corresponding device. Some or all of the method steps may be executed by (or using), for example, hardware devices such as a microprocessor, a programmable computer, or an electronic circuit. In some embodiments, one or more of the method steps may be executed by these devices.

Although the present disclosure has been described with reference to the embodiments of the present disclosure, a person ordinarily skilled in the art will understand that various modifications and changes can be made to the present disclosure without departing from the spirit and scope of the present disclosure as set forth in the claims below.

## Claims

1. A battery system in an electric vehicle, the battery system comprising:
a main battery;
a battery management device configured to control power supply from the main battery to be blocked when an abnormality has occurred in one or more components included in the electric vehicle; and
an auxiliary battery provided separately from the main battery and configured to supply power to one or more components provided in a cooling system that cools the main battery when the power supply from the main battery is blocked.

2. The battery system according to claim 1, wherein the auxiliary battery is configured to supply power to a refrigerant circulation pump that circulates the refrigerant within a refrigerant circulation path.

3. The battery system according to claim 2, wherein the main battery is configured to supply power to the cooling system, and
wherein the auxiliary battery is configured to supply power only to the refrigerant circulation pump provided in the cooling system when the power supply from the main battery is blocked.

4. The battery system according to claim 1, wherein the cooling system includes:
a refrigerant circulation path in which the refrigerant flows;
a chiller configured to cool the refrigerant; and
a refrigerant circulation pump configured to allow the refrigerant to circulate within the refrigerant circulation path, and
wherein the auxiliary battery is configured to supply power to the refrigerant circulation pump when the power supply from the main battery is blocked.

5. The battery system according to claim 4, wherein, when the abnormality has occurred in the one or more components,
the power supply to the chiller by the main battery is blocked, and
the refrigerant circulation pump operates using the power supplied by the auxiliary battery to allow the refrigerant to circulate within the refrigerant circulation path without being cooled by the chiller.

6. The battery system according to claim 1, wherein the auxiliary battery is configured to exhibit an output voltage lower than an output voltage of the main battery.

7. The battery system according to claim 1, wherein, when the abnormality has occurred in the one or more components,
the battery management device switches a main relay disposed in a power supply path in an output side of the main battery from a closed state to an open state, and
one or more components provided in the cooling system are controlled to operate using the power supplied by the auxiliary battery.

8. The battery system according to claim 1, wherein the battery management device diagnoses whether the abnormality has occurred in the battery system in a driving mode of the electric vehicle or a charging mode of the main battery, and, when the occurrence of the abnormality is detected, controls the power supply from the main battery to be blocked and the power supply from the auxiliary battery to be allowed.

9. The battery system according to claim 1, wherein the battery management device is activated at each predetermined time in a parking mode of the electric vehicle or in a sleep mode of the battery system and diagnoses whether the abnormality has occurred in the battery system, and, when the occurrence of the abnormality is detected, control the power supply from the main battery to remain blocked and the power supply from the auxiliary battery to be allowed.

10. A method of operating a battery system by a battery management device disposed in an electric vehicle, the method comprising:
diagnosing whether an abnormality has occurred in the battery system;
when the occurrence of the abnormality is detected, controlling power supply from a main battery to be blocked; and
when the power supply from the main battery is blocked, controlling an auxiliary battery, which is provided separately from the main battery, to supply power to one or more components included in a cooling system configured to cool the main battery.

11. The method according to claim 10, wherein the controlling the auxiliary battery to supply power to the one or more components provided in the cooling system includes:
controlling the auxiliary battery to supply power to a refrigerant circulation pump configured to circulate the refrigerant within the refrigerant circulation path.

12. The method according to claim 11, wherein the main battery is configured to supply power to the cooling system, and
wherein, when the power supply from the main battery is blocked, the auxiliary battery is configured to supply power only to the refrigerant circulation pump provided in the cooling system.

13. The method according to claim 10, wherein the cooling system includes:
a refrigerant circulation path in which the refrigerant flows;
a chiller configured to cool the refrigerant; and
a refrigerant circulation pump configured to allow the refrigerant to circulate within the refrigerant circulation path, and
wherein the controlling the auxiliary battery to supply power to the one or more components provided in the cooling system includes:
controlling the auxiliary battery to supply power to the refrigerant circulation pump.

14. The method according to claim 13, wherein the controlling the power supply from the main battery to be blocked includes:
controlling the power supply to the chiller by the main battery to be blocked, and
wherein the controlling the auxiliary battery to supply power to the refrigerant circulation pump includes:
operating the refrigerant circulation pump by power supplied by the auxiliary battery to allow the refrigerant to circulate within the refrigerant circulation path without being cooled by the chiller.

15. The method according to claim 10, wherein the auxiliary battery is configured to exhibit an output voltage lower than an output voltage of the main battery.

16. The method according to claim 10, wherein the controlling the power supply from the main battery to be blocked includes:
switching a main relay disposed in a power supply path in an output side of the main battery from a closed state to an open state, and
wherein the controlling the auxiliary battery to supply power to the one or more components includes:
controlling the one or more components to operate using the power supplied by the auxiliary battery.

17. The method according to claim 10, wherein the diagnosing whether the abnormality has occurred in the battery system includes:
diagnosing whether the abnormality has occurred in the battery system in a driving mode of the electric vehicle or in a charging mode of the main battery.

18. The method according to claim 10, wherein the diagnosing whether the abnormality has occurred in the battery system includes:
activating the battery management device at each predetermined time in a parking mode of the electric vehicle or in a sleep mode of the battery system, and diagnosing whether the abnormality has occurred in the battery system.

19. A battery system in an electric vehicle, the battery system comprising:
a main battery configured to supply power to the electric vehicle;
a battery management device configured to control power supply from the main battery to be blocked when an abnormality has occurred in one or more components included in the electric vehicle; and
an auxiliary battery provided separately from the main battery and configured to directly supply power to only a specific component among one or more components provided in a cooling system that cools the main battery and not to supply power to remaining components of the cooling system when the power supply from the main battery is blocked.

20. The battery system according to claim 19, wherein the cooling system includes:
a refrigerant circulation path in which the refrigerant flows;
a chiller configured to cool the refrigerant; and
a refrigerant circulation pump configured to allow the refrigerant to circulate within the refrigerant circulation path, and
wherein, when the power supply from the main battery is blocked, the auxiliary battery is configured to supply power only to the refrigerant circulation pump of the cooling system.
